# EUROPEAN PATENT SPECIFICATION

(11) **EP 4 538 991 B1**
(45) Date of publication and mention of the grant of the patent: **02.09.2026**
(21) Application number: 24173222.1
(22) Date of filing: 30.04.2024
(51) Int. Cl.: G06V 10/774, G06V 10/82, G06V 20/56

(54) **APPARATUS AND METHOD FOR IMAGE RECOGNITION**
VORRICHTUNG UND VERFAHREN ZUR BILDERKENNUNG
APPAREIL ET PROCÉDÉ DE RECONNAISSANCE D'IMAGE

(30) Priority: 13.10.2023 KR 20230136666
(43) Date of publication of application: 16.04.2025
(73) Proprietor: Hyundai Mobis Co., Ltd., Gangnam-gu Seoul 06141 (KR)
(72) Inventor: CHU, Heon Jeong, Yongin-si, Gyeonggi-do 16891 (KR)
(74) Representative: Frenkel, Matthias Alexander

(56) References cited:
- US-A1- 2021 215 818
- ANONYMOUS: "Generative adversarial network", WIKIPEDIA, 23 August 2023 (2023-08-23), pages 1 - 14, XP093204816, Retrieved from the Internet <URL:https://en.wikipedia.org/w/index.php?title=Generative_adversarial_network&oldid=1171904886> [retrieved on 20240913]
- IAN J GOODFELLOW ET AL: "Generative Adversarial Nets", NIPS'14 PROCEEDINGS OF THE 27TH INTERNATIONAL CONFERENCE ON NEURAL INFORMATION PROCESSING SYSTEMS, vol. 2, 8 December 2014 (2014-12-08), pages 1 - 9, XP055572979, DOI: http://papers.nips.cc/paper/5423-generative-adversarial-nets.pdf

## Description

### CROSS-REFERENCE TO RELATED APPLICATION

### TECHNICAL FIELD

The present disclosure relates to a technology of learning image recognition, and more particularly to an apparatus and a method for learning image recognition, capable of improving a recognition rate of each element, which is to be detected, through an image recognition model (AI-based image recognition model) based on artificial intelligence (AI) in an autonomous driving vehicle.

### BACKGROUND

To resolve a complex problem or a problem having an unknown solution, various studies and researches have been performed on implementing the thinking manner of a human being through a computing device. One among them is the technology of a neural network modeled to implement the behavior of human neurons in hardware. The technology of the neural network is used to perform modeling for a learning model based on the neural network, which is obtained by mathematically expressing synaptic neural transmission processes, for the purpose of approaching the learning ability of a human being. The neural network may map an input and an output to each other through learning.

The most representative thinking behavior through the neural network is a recognition behavior that identifies an object, and such a neural network is referred to as a recognition model. The recognition model is configured and machine-trained to recognize what an object is or what the behavior of the object is.

A technology of recognizing an image, which is a core technology in autonomous driving, employs an image recognizing algorithm based on deep neural network (DNN), and image data obtained on a real road to train/verify the image recognizing algorithm. For example, the image recognizing algorithm may be trained and verified through a post-processing operation and a labeling operation for the image data obtained on the real road. Recently, a developing manner employing a virtual simulation has been utilized to effectively perform the training process and the verifying process.

However, when a simulation synthetic image is verified, the range for verifying the simulation synthetic image is limited due to the difference in quality between a real image and a synthetic image. In addition, the costs for producing a database (DB) of real images are excessively required, and some data is disposable. Accordingly, when an image recognizing algorithm to be applied to a new car is developed, costs are consecutively spent to produce the DB of the real image for training and verifying. US 2021/215818 A1 discloses a computing machine receiving a real synthetic aperture radar (SAR) image including one or more targets, wherein the real SAR image is one of a plurality of real SAR images in a training set, the computing machine generates, for the real SAR image, a model-based target shadow background (TSB) image using a three-dimensional (3D) model of the target, generates, for the real SAR image and using an auto-encoder engine, an auto-encoder-generated TSB image using an artificial neural network (ANN), computes, using a discriminator engine, an image difference between the auto-encoder-generated TSB image and the model-based TSB image, and adjusts weights in the auto-encoder engine based on the computed image difference.

### SUMMARY

The invention is defined by the appended claims. The present disclosure has been made to solve the above-mentioned problems occurring in the related art while advantages achieved by the related art are maintained intact.

An aspect of the present disclosure provides an apparatus and a method for learning image recognition, capable of improving a recognition rate for an element, which is to be detected, through an image recognition model (hereinafter, an AI-based image recognition model) based on artificial intelligence (AI) in an autonomous driving vehicle.

Another aspect of the present disclosure provides an apparatus and a method for learning image recognition, capable of analyzing a cause of degrading recognition performance, which is found in an AI-based learning and verification process, to extract a feature of an image, which is analyzed through AI, to re-generate an image, in which the extracted feature is reflected, and to perform the learning and verification process, thereby improving image recognition performance.

Another aspect of the present disclosure provides an apparatus and a method for learning image recognition, capable of training an image recognition model by reflecting a latent vector for each element, which is not recognized or erroneously recognized when generating an enhanced image for a synthetic image generated through simulation, thereby improving the synthetic image quantitatively/qualitatively, such that the performance of the image recognition model.

### BRIEF DESCRIPTION OF THE DRAWINGS

The above and other objects, features and advantages of the present disclosure will be more apparent from the following detailed description taken in conjunction with the accompanying drawings:
FIG. 1 is a view illustrating an explored domain and an unexplored domain depending on an autonomous driving level;
FIG. 2 is a block diagram illustrating an apparatus for learning image recognition, according to an embodiment of the present disclosure;
FIG. 3 is a flowchart illustrating the operations of a method for learning image recognition according to another embodiment of the present disclosure;
FIG. 4 is a flowchart illustrating the operation in S350 of FIG. 3 according to an embodiment;
FIG. 5A and FIG. 5B are a view illustrating a target recognition rate for each element, and a view illustrating a recognition result, respectively;
FIG. 6 is a view illustrating the process of analyzing the latent vector of an element; and
FIG. 7 is a block diagram of a computing system to execute a method for learning image recognition according to another embodiment of the present disclosure.

### DETAILED DESCRIPTION

Hereinafter, the embodiment of the present disclosure will be described in detail with reference to accompanying drawings to allow those skilled in the art to easily reproduce the present disclosure However, the present disclosure may be implemented in various forms, and is limited to embodiments described herein.

In the following description of the present disclosure, in the case where it is determined that the detailed description of a related known configuration or function may make the subject matter of the present disclosure unclear, the details thereof may be omitted. In addition, to clearly describe the present disclosure, part, which is irrelevant to the present disclosure, is omitted and similar reference numerals will be assigned to similar parts through the whole specification.

It will be understood that when an element is referred to as being "connected" or "coupled" to another element, it can be directly connected or coupled to the other element or intervening elements may be present. In addition, a certain component "comprising" or "have" another component may refer to that the certain component further includes still another component without excluding the another component unless specified otherwise.

In the present disclosure, the terms "first" or "second" is used to distinguish between one component and another component without limiting the sequence or the importance between components unless specified otherwise. Accordingly, a "first component" according to an embodiment may be referred to as a "second component" according to another embodiment, and the "second component" according to an embodiment may be referred to as the "first component" according to another embodiment, within the scope of the present disclosure.

According to the present disclosure, components or devices distinct from each other are provided to distinctly describe the feature of each component, and does not refer to that the components or devices are separated from each other. In other words, a plurality of components or devices are integrated and implemented in one hardware or software unit. Alternatively, one component or device is split and implemented in unit of multiple hardware or software. Accordingly, unless specified otherwise, even an embodiment having components or devices provided integrally with each other or separately from each other is falling within the scope of the present disclosure. Each device may be configured to perform particular operations or actions by virtue of having software, firmware, hardware (e.g., processor), or a combination of them installed in the device that in operation causes or cause the device to perform the actions.

In the present disclosure, components described according to various embodiments do not refer to essential components, and some of the components may be selectively provided. Therefore, an embodiment including a subset of components described according to an embodiment is included in the present disclosure. In addition, even an embodiment including components added to components described according to various embodiments is included in the scope of the present disclosure.

In the present disclosure, the location relationship (for example, an upper portion, a lower portion, a left side, or a right side) expressed in the present specification is provided only for the illustrative purpose. When accompanying drawings of the present disclosure are inversely shown, the location relationship described in the present disclosure may be inversely interpreted.

In the disclosure disclosed herein, each of the wordings "A or B", "at least one of A and B", "at least one of A or B", "A, B, or C", "at least one of A, B, and C", or "at least one of A, B, or C", and the like used herein may include any one and all combinations of items arranged together in a relevant wording of the wordings.

A technology of recognizing an image, which is a core technology in autonomous driving, trends to utilize an AI technology represented as a deep neural network (DNN) technology. The technology of recognizing the image requires images having big data provided in huge amount and variously. Recently, the technology of recognizing the image employs a supervised learning technology of producing an image data set referred to as a "real image", and training a cognition algorithm through a labeling process and a pre/post process for data required for object recognition.

However, a technology of recognizing an image based on an AI requires a larger amount of costs, such as data acquiring costs, costs for pre-processing/post-processing, or labeling costs, to generate training/verifying data. In addition, when required performance is not satisfied in training and verifying, performance should be enhanced through an additional training process. However, currently, there is no suggest for analyzing a cause to improve recognition performance and generating an image, in which information for enhancing the analyzed cause is reflected, such that a re-training process/re-verifying process are performed.

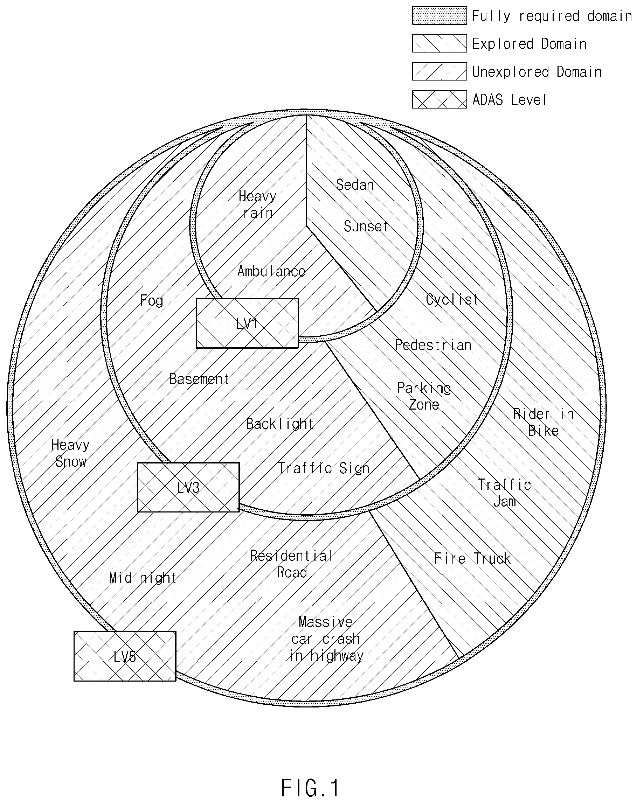

In addition, currently, a simple approaching manner is employed to additionally train a larger amount of image with respect to an instance, which is not recognized/or erroneously recognized, to improve the recognition performance. As the autonomous driving level is advanced, the complexity and the difficulty for developing a technology are increased and evaluation items to be verified are exponentially increased. For example, as an ADAS level is advanced as shown in an explored domain/unexplored domain based on the autonomous driving level shown in FIG. 1, an unexplored domain making an image recognition algorithm, which is able to be handled by a human being, difficult is increased. Accordingly, it is difficult to ensure recognition performance quality required for each autonomous driving level.

In addition, it is actually difficult to train/verify a whole domain of a recognition algorithm based on an AI, through a manner such as verifying a real car by the ability of a human being. Accordingly, a training manner and an evaluating manner through virtual simulation for efficient and effective development have been suggested and utilized. In addition, a developing manner utilizing a synthetic image generated through simulation has been performed. However, the range of utilizing the synthetic image is limited due to the difference in quality between the synthetic image and the real image.

According to the subject matters of embodiments of the present disclosure, the cause of degrading recognition performance, which is found in the AI-based learning and verification process, may be analyzed to extract the feature of the image, which is analyzed through AI, to re-generate an image, in which the extracted feature is reflected, and to perform the learning and verification process, thereby improving image recognition performance.

Furthermore, according to embodiments of the present disclosure, an image recognition model may be trained by reflecting a feature (a latent vector) for each element, which is not recognized or erroneously recognized when generating the enhanced image for the synthetic image generated through simulation, thereby improving the realized synthetic image quantitatively/qualitatively, such that the performance of the image recognition model is improved.

Furthermore, according to embodiments of the present disclosure, the cause for an image database (DB) failed in satisfying the recognition rate may be analyzed. Accordingly, the recognition rate for each element through an image recognition algorithm (or model) may be improved. In addition, as a database having substantially real images is produced, the substitution rate for the real image may be increased, so the costs and the time for generating an image may be reduced.

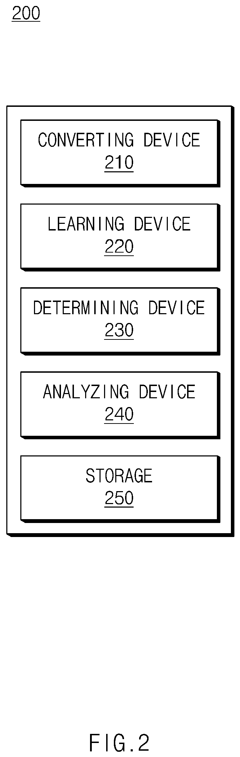

The apparatus and method for learning the image recognition according to embodiments of the present disclosure will be described with reference to FIGS. 2 to 6.

FIG. 2 is a block diagram illustrating the apparatus for learning image recognition, according to an embodiment of the present disclosure.

Referring to FIG. 2, according to an embodiment of the present disclosure, the apparatus 200 for learning image recognition includes a converting device 210, a learning device 220, a determining device 230, an analyzing device 240, and a storage 250.

The storage 250, which is a device to store data related to the apparatus of the present disclosure, stores all data related to the technology of the present disclosure, in which the all data includes a generative AI mode, an image recognition model (or algorithm) based on AI, feature information database (DB), an enhanced image generated through the generative model, a synthetic image input as an input image, information, such as a vehicle, a pedestrian, or a raining state, about an element to be recognized in an image, or information, such as a guardrail shadow, a construction section, or a tunnel section, about a driving condition. The storage 250 may store all data related to the technology of the present disclosure or required to perform of the technology of the present disclosure, as well as the above-described data.

The converting device 210 converts an input image, such as a simulation synthetic image, which is input to the apparatus 200 for learning image recognition, into an enhanced image enhanced in a specific element through a generative AI model for enhancing a preset latent vector for each element.

According to an embodiment, with respect to the converted enhanced image, the converting device 210 may receive the latent vector for the element, which is analyzed by the analyzing device 240, from the analyzing device 240 and reflect the latent vector in the generative AI model, thereby generating a newly enhanced image by converting the input image to another enhanced image, for example, the newly enhanced image, which is enhanced in the latent vector of the element analyzed by the analyzing device 240. In addition, when an image recognition algorithm is reevaluated through a new enhanced image, and thus the recognition rate for the new enhanced image is not satisfied, the latent vector of an element analyzed with respect to the new enhanced image is received from the analyzing device 240. In this case, the converting device 210 may reflect the latent vector of the element, which is received, in the generative AI model, thereby re-generating a new enhanced image for the input image. The above processes are iteratively performed until the recognition rate for an element included in the image is higher than a target recognition rate which is preset.

The generative AI model, which is a converting model having a function of realizing a synthetic image, is a generative model based on a latent vector for making a customized image to enhance an element showing weakness for the recognition in the image recognition model such that the recognition performance is improved. According to the generative AI model, new data, which is absent from the existing learning DB, should be created based on a latent vector of an element, which is extracted by the analyzing device 240, such that the image recognition model is optimally trained, and may generate various images in the range beyond the specification or the thinking ability of a human being.

The training device 220 may train or re-train the image recognition model based on AI by using the enhanced image, which is obtained through the conversion of the converting device 210, for example, by using the realized synthetic image, in which the latent vector of the element is reflected. In addition, the training device 220 may provide or output a recognition result (for example, the recognition rate for each element) for each element, which is to be detected, included in the enhanced image by using the image recognition model based on AI. In other words, the training device 220 additionally receives a customized image, (that is an enhanced image) to improve the recognition performance, from the converting device 210, when the performance of the image recognition model is insufficient, and complementarily trains the image recognition model, thereby repeatedly complementing the image recognition model such that the performance of the image recognition model is improved.

According to an embodiment, the training device 220 may be a component which not only trains the AI-based image recognition model using the enhanced image, but also verifies the AI-based image recognition model trained. For example, the training device 220 may train or re-train the AI-based image recognition model by employing the enhanced image, in which the latent vector for each element is reflected, as learning data. As the recognition result for each element through the AI-based image recognition model trained is verified, the performance of the AI-based image recognition model, which is trained using the enhanced image enhanced in the latent vector of the element. In addition, the training device 220 may iteratively perform the process of training and verifying the AI-based image recognition model until a preset target recognition rate is achieved for each element.

The determining device 230 compares a recognition rate (or recognition result) for each element, which is included in the enhanced image output from the training device 220, with a target recognition rate, which is preset or defined, and provides a comparison result.

In this case, the target recognition rate may be variously set depending on an autonomous driving level, a driving condition, or an element of an image. The target recognition rate may be set based on a specification for image recognition of each element or may be set by an individual or a businessperson who provides the technology.

In other words, the determining device 230 may judge or determine whether a recognition rate is satisfied, based on the specification for each autonomous driving function. When a recognition rate for each element satisfies the target recognition rate, the process for the mass-production is performed. When the recognition rate fails to satisfy the target recognition rate, relevant enhanced images are transmitted to the analyzing device 240.

The analyzing device 240 may analyze a latent vector of an element having a recognition rate lower than the target recognition rate, when the element having the recognition rate lower than the target recognition rate is determined as being present based on the comparison result for each element received from the determining device 230, and may provide the latent vector of the element, which is analyzed, to the converting device 210 such that the analyzed latent vector of the element is reflected in the generative AI model

According to an embodiment, the analyzing device 240 may iteratively provide the latent vector of the element, which is analyzed, to the converting device 210 until the recognition rate for the each element is equal to or greater than the target recognition rate for the each element.

In other words, the analyzing device 240 may iteratively perform the process of analyzing the latent vector for each element, which is not recognized (under-recognition) or erroneously recognized (erroneous recognition) as the recognition rate of the element fails to satisfy the target recognition rate in the enhanced image, and providing the analysis result to the converting device 210, until the recognition rates for all elements satisfy the target recognition rate.

As described above, the analyzing device 240 may extract elements, which provide causes of under-recognition or erroneous recognition in an image failing to satisfy target performance. The extracted elements may be transferred to the process of extracting the latent vector of enhanced images or the image through an AI model, and the latent vector of each element extracted through the AI model is analyzed and a DB may be made using the latent vector.

In this case, the extracted latent vector may include latent vector of factors, such as background, a shape, a texture, color tone, and the variety of object types, that affect recognition performance.

The feature extracted by the analyzing device 240 may include the latent vector affecting the recognition performance, and the above data (or the latent vector) may be used as input data of the converting device, which includes the generative AI model.

In this case, the generative AI model may generate an advanced enhanced image for improving recognition performance based on information about the input feature.

As described above, the AI image recognition model may show improved recognition performance by learning various and extensive amounts of data, which is not provided through the existing learning/verification cycle, through enhanced images that include the latent vector affecting recognition performance.

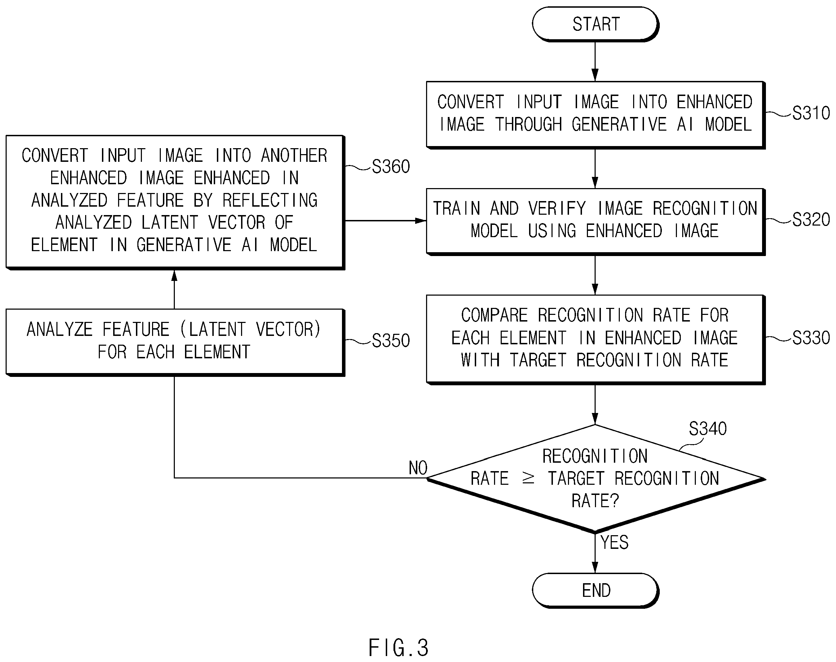

It is obvious to those skilled in the art that the apparatus according to an embodiment of the present disclosure includes all data described in the method referring to FIGS. 3 to 6, even though the description about the apparatus is omitted.

Hereinafter, operations in the apparatus for learning the image recognition according to an embodiment of the present disclosure will be described in detail with reference to FIGS. 3 to 6.

FIG. 3 is a flowchart illustrating the operations of a method for learning image recognition according to another embodiment of the present disclosure, which shows the flow of the operations by the apparatus for learning the image recognition of FIG. 2.

Referring to FIG. 3, the method for learning the image recognition according to another embodiment of the present disclosure include generating an enhanced image by converting an input image, such as a simulation synthetic image into the enhanced image enhanced in a specific element through a generative AI model for enhancing a preset latent vector for each element (S310).

In this case, the generative AI model may be a model to generate an enhanced image obtained by reflecting feature information (latent vector) in an input image, as the input image and the feature information are input. The generative AI model may be trained using a learning data set previously collected

The input image, that is, the synthetic image is converted into the enhanced image in S310, and the AI-based image recognition model may be trained or re-trained using the converted enhanced image. Then, the recognition result (for example, the recognition rate for each element) for each element included in the enhanced image may be provided or output using the AI-based image recognition model (S320).

In this case, in S320, the AI-based image recognition model may be trained or re-trained by employing the enhanced image, in which the latent vector for each element is reflected, as learning data, and the recognition result for each element through the AI-based image recognition model trained is verified, thereby verifying the performance of the AI-based image recognition model which is trained.

When the recognition result (that is, the recognition rate) for each element is output in S320, the recognition rate for each element is equal to or greater than the target recognition rate preset for the element (in more detail, the autonomous driving level). When the element having the recognition rate lower than the target recognition rate is determined as being present, the latent vector of the element having the recognition rate lower than the target recognition rate is analyzed (S340 and S350).

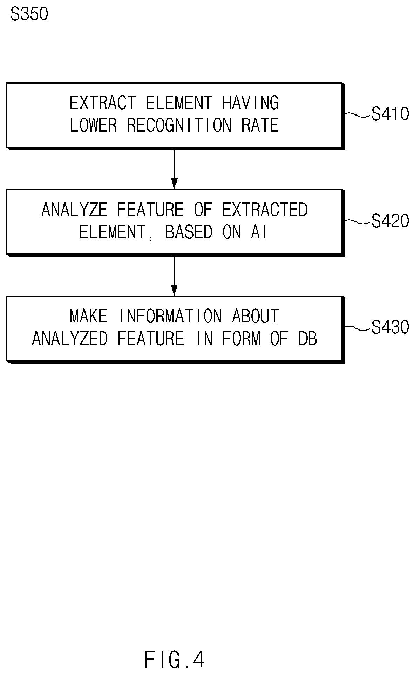

Accordingly, the analyzing (S350) of the feature (latent vector) for each element may include, as illustrated in FIG. 4, extracting an element having a lower recognition rate from the enhanced image and analyzing the extracted element, based on AI to analyze the feature of the extracted element. The information about the analyzed feature of the element is made in the form of a database (DB) to be reflected in the generative AI model (S410, S420, and S430).

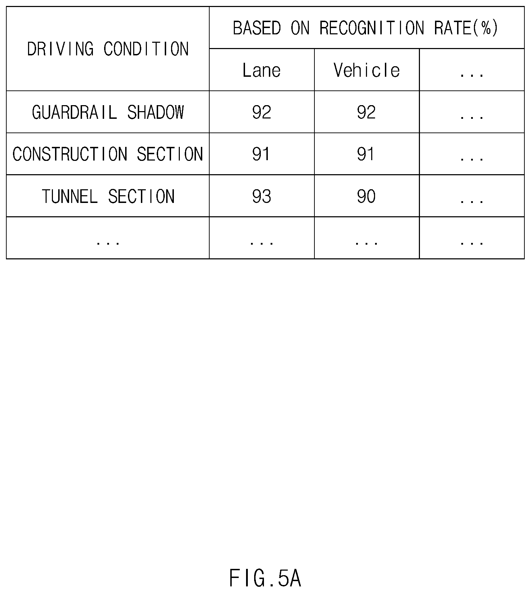

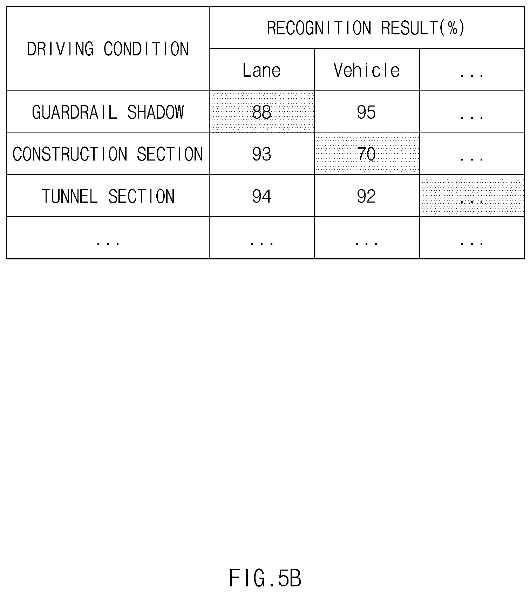

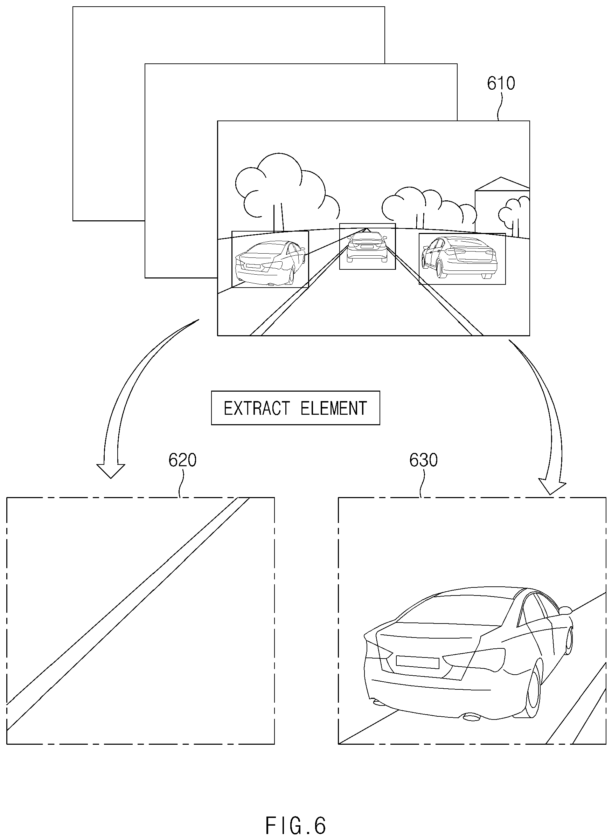

For example, as illustrated in FIG. 5A, the target recognition rate (or based on the recognition rate) may be determined based on a driving condition (a guardrail shadow, a construction section, or a tunnel section) and an element (lane or vehicle; in more detail, an autonomous driving level). In FIG. 5A, under the driving condition of the guardrail shadow, the target recognition rate of "Lane" and "vehicle" may be 92% and 92%, respectively. In addition, the target recognition rates of "Lane" and "vehicle" may be 91% and 91%, respectively, in the construction section. In addition, the target recognition rates of "Lane" and "vehicle" may be 93% and 90%, respectively, under the driving condition of the tunnel section. Regarding the recognition result of the image recognition model, as illustrated in FIG. 5B, the recognition results of "Lane" and "vehicle" may be 88% and 95%, respectively, under the driving condition of the guardrail shadow, the recognition results of "Lane" and "vehicle" may be 93% and 90%, respectively, in the construction section, and the recognition results of "Lane" and "vehicle" may be 94% and 92%, respectively, under the driving condition of the tunnel section. In this case, according to the method of the present disclosure, as illustrated in FIG. 6, "Lane" 620 under the driving condition of the guardrail shadow and "Vehicle" 630 under the driving condition of the construction section may be extracted as elements having recognition rates lower than the target recognition rate. As the feature of the extracted element is analyzed, the latent vector of the element having the lower recognition rate in the enhanced image may be made in the form of the DB.

When the latent vector of the element having the lower recognition rate is analyzed in S350, the input image (that is the synthetic image based on a simulation) may be converted into another enhanced image enhanced in the analyzed feature of the element by reflecting the analyzed latent vector of the element in the generative AI model (S360).

When another enhanced image (such as the newly enhanced image), in which the analysis feature for the element having the recognition rate lower than the target recognition rate is reflected, is converted and generated, the process of training or re-training the AI-based image recognition model using the newly enhanced image and verifying the trained AI-based image recognition model (S320) and the process of comparing the recognition rate of each element in the newly enhanced image with a target recognition rate and determining the comparison result (S330, and S340).

The processes, for example, S320 to S340 and S350 to S360, may be iteratively performed until the recognition rate of each element output through the image recognition model is equal to or greater than the target recognition rate.

In other words, the method of the present disclosure is iteratively performed by analyzing the latent vector for each element, which is not recognized or erroneously recognized and fails to satisfy the target recognition rate in the enhanced image, reflecting the information about the analyzed feature in the generative AI model, such that the enhanced image having the analysis feature reflected therein is generated, until the recognition rates for all elements included in the enhanced image satisfy the target recognition rate. Accordingly, the AI-based image recognition model may be improved and may be easily verified.

It is obvious to those skilled in the art that the method according to another embodiment of the present disclosure includes all information described in the apparatus referring to FIG. 2, even though the description about the method is omitted.

As described above, according to the apparatus and the method for learning the image recognition of embodiments of the present disclosure, the cause that the recognition rate is not satisfied in the image DB may be analyzed, thereby improving the recognition rate through an image recognition algorithm or image recognition model.

In addition, according to the apparatus and the method for learning the image recognition of embodiments of the present disclosure, the cause of degrading recognition performance, which is found in the AI-based learning and verification process, may be analyzed to extract the feature of the image, which is analyzed through AI, to re-generate the image, in which the extracted feature is reflected, and to perform the learning and verification process, thereby improving image recognition performance.

Furthermore, according to the apparatus and the method for learning the image recognition of embodiments of the present disclosure, the image recognition model is trained by reflecting the latent vector for each element, which is not recognized or erroneously recognized, when generating the enhanced image for the synthetic image generated through simulation, thereby improving the synthetic image quantitatively/qualitatively, such that the performance of the image recognition model.

In addition, according to the apparatus and the method for learning the image recognition of embodiments of the present disclosure, the cause for an image database (DB) failed in satisfying the recognition rate may be analyzed. Accordingly, the recognition rate of the image recognition algorithm (or model) may be improved. In addition, as a database having substantially real images is built, the substitution rate for the real image may be increased, so the costs and the time for generating an image may be reduced.

In addition, according to the apparatus and the method for learning the image recognition of embodiments of the present disclosure, the new DB may be generated by reflecting the latent vector for each element in the existing image, such that the data may be re-utilized. Accordingly, the diversity of images is enhanced through a scheme of generating an image based on AI, thereby firmly performing training and verification for the image recognition model.

In addition, according to the apparatus and the method for learning the image recognition of embodiments of the present disclosure, an AI model feeds back the feature of an element, which is not recognized/erroneously recognized, through the process having a circulation structure provided in a closed loop, such that the AI self-enhances an image, and iteratively circulates the whole process until the performance satisfies target performance, thereby minimizing a developer intervening a developing process.

In addition, according to the apparatus and the method for learning the image recognition of embodiments of the present disclosure, the AI model overcomes the limitation in the type/range of an image generated by a human being. Accordingly, the coverage of the range required to train and verify each autonomous driving level, may be more enlarged and algorithm may be developed earlier, as compared to a conventional developing scheme.

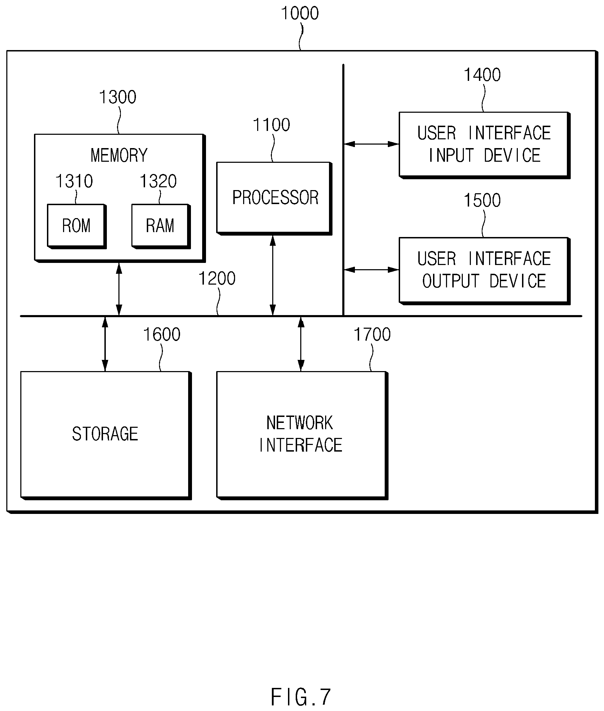

FIG. 7 is a block diagram illustrating a method for learning image recognition, according to an embodiment of the present disclosure.

Referring to FIG. 7, according to another embodiment of the present disclosure, the method for learning image recognition may be implemented through the computing system. A computing system 1000 may include at least one processor 1100, a memory 1300, a user interface input device 1400, a user interface output device 1500, a storage 1600, and a network interface 1700, which are connected with each other via a system bus 1200.

The processor 1100 may be a central processing unit (CPU) or a semiconductor device for processing instructions stored in the memory 1300 and/or the storage 1600. Each of the memory 1300 and the storage 1600 may include various types of volatile or non-volatile storage media. For example, the memory 1300 may include a read only memory (ROM; see 1310) and a random access memory (RAM; see 1320).

Thus, the operations of the methods or algorithms described in connection with the embodiments disclosed in the present disclosure may be directly implemented with a hardware module, a software module, or the combinations thereof, and executed by the processor 1100. The software module may reside on a storage medium (i.e., the memory 1300 and/or the storage 1600), such as a RAM, a flash memory, a ROM, an erasable and programmable ROM (EPROM), an electrically EPROM (EEPROM), a register, a hard disc, a removable disc, or a compact disc-ROM (CD-ROM). The exemplary storage medium may be coupled to the processor 1100. The processor 1100 may read out information from the storage medium and may write information in the storage medium. Alternatively, the storage medium may be integrated with the processor 1100. The processor 1100 and storage medium may reside in an application specific integrated circuit (ASIC). The ASIC may reside in a user terminal. Alternatively, the processor 1100 and the storage medium may reside as separate components of the terminal of the user.

According to the present disclosure, the recognition rate for the element, which is to be detected, through the image recognition model based on artificial intelligence (AI) may be improved in the autonomous driving vehicle.

According to the present disclosure, the cause of degrading the recognition performance, which is found in the AI-based learning and verification process, may be analyzed to extract the feature of the image, which is analyzed through AI, to re-generate the image, in which the extracted feature is reflected, and to perform the learning and verification process, thereby improving image recognition performance.

According to the present disclosure, the image recognition model may be trained by reflecting the latent vector for each element, which is not recognized or erroneously recognized when generating the enhanced image for the synthetic image generated through simulation, thereby improving the synthetic image quantitatively/qualitatively, such that the performance of the image recognition model.

According to the present disclosure, the cause for an image database (DB) failed in satisfying the recognition rate may be analyzed. Accordingly, the recognition rate of the image recognition algorithm (or model) may be improved. In addition, as a database having substantially real images is produced, the substitution rate for the real image may be increased, so the costs and the time for generating an image may be reduced.

According to the present disclosure, the new DB may be generated by reflecting the latent vector for each element in the existing image, such that the data may be re-utilized. Accordingly, the diversity of images is enhanced through a scheme of generating an image based on AI, thereby firmly performing training and verification for the image recognition model.

The effects produced by the present disclosure are not limited to the aforementioned effects, and any other effects not mentioned herein will be clearly understood from the following description by those skilled in the art to which the present disclosure pertains.

## Claims

1. An apparatus for image recognition, the apparatus comprising:
a converting device (210) configured to generate first enhanced images by converting input images to the first enhanced images through a generative artificial intelligence, AI, model which enhances a latent vector of an element in the input images;
a training device (220) configured to train an image recognition model based on AI, by utilizing the first enhanced images;
a determining device (230) configured to compare a first recognition rate of the image recognition model for the element in the first enhanced images with a target recognition rate preset for the element; and
an analyzing device (240) configured to, if the first recognition rate is lower than the target recognition rate:
crop the element from the first enhanced images;
extract the latent vector from the cropped element through an AI model;
analyze the latent vector based on the AI model;
store the latent vector in a database; and
provide the analyzed latent vector to the converting device (210),
wherein the element includes a lane and a vehicle included in the input images,
wherein the converting device (210) further generates second enhanced images by updating the generative AI model with the analyzed latent vector and converting the input images to the second enhanced images through the updated generative AI model.

2. The apparatus of claim 1,
wherein the determining device (230) further compares a second recognition rate of the image recognition model for the element in the second enhanced images with the target recognition rate, and
wherein, if the second recognition rate is lower than the target recognition rate, the analyzing device (240) further analyzes the latent vector, and provides the analyzed latent vector to the converting device (210).

3. The apparatus of claim 2, wherein the analyzing device (240) further iteratively provides the analyzed latent vector of the element to the converting device (210) until the recognition rate is equal to or greater than the target recognition rate.

4. The apparatus of any one of claims 1 to 3, wherein the target recognition rate depends on an autonomous driving level, and
wherein the input images include simulation synthetic images.

5. A computer-implemented method for learning image recognition, the method comprising:
generating (S310), by a converting device (210), first enhanced images by converting input images to the first enhanced images through a generative artificial intelligence, AI, model which enhances a latent vector of an element in the input images;
training (S320), by a training device (220), an image recognition model based on AI, by utilizing the first enhanced images;
comparing (S330), by a determining device (230), a first recognition rate of the image recognition model, for the element with a target recognition rate preset for the element; and
by an analyzing device (240), if the first recognition rate is lower than the target recognition rate, cropping the element from the first enhanced images, extracting the latent vector from the cropped element through an AI model, analyzing the latent vector of the element based on the AI model, storing the latent vector in a database, and providing the analyzed latent vector to the converting device (210), wherein the element includes a lane and a vehicle included in the input images; and
generating (S360), by the converting device (210), second enhanced images by updating the generative AI model with the analyzed latent vector and converting the input images to the second enhanced images through the updated generative AI model.

6. The method of claim 5, wherein the comparing includes:
comparing, by the determining device (230), a second recognition rate of the image recognition model for the element in the second enhanced images with the target recognition rate, and
wherein the analyzing includes:
analyzing, by the analyzing device (240), the latent vector, if the second recognition rate is lower than the target recognition rate; and
providing the analyzed latent vector to the converting device (210).

7. The method of claim 6, wherein the method further comprises:
iteratively providing the analyzed latent vector of the element to the converting device (210) until the recognition rate is equal to or greater than the target recognition rate.

8. The method of any one of claims 5 to 7,
wherein the target recognition rate depends on an autonomous driving level, and
wherein the input images include simulation synthetic images.

## Patentansprüche

1. Vorrichtung zur Bilderkennung, wobei die Vorrichtung Folgendes umfasst:
eine Konvertierungseinrichtung (210), die dazu eingerichtet ist, erste verbesserte Bilder zu erzeugen, indem Eingangsbilder durch ein generatives Modell der künstlichen Intelligenz, KI, das einen latenten Vektor eines Elements in den Eingangsbildern verbessert, in die ersten verbesserten Bilder konvertiert werden;
eine Trainingseinrichtung (220), die dazu eingerichtet ist, ein auf KI basierendes Bilderkennungsmodell unter Verwendung der ersten verbesserten Bilder zu trainieren;
eine Bestimmungseinrichtung (230), die dazu eingerichtet ist, eine erste Erkennungsrate des Bilderkennungsmodells für das Element in den ersten verbesserten Bildern mit einer für das Element voreingestellten Zielerkennungsrate zu vergleichen; und
eine Analyseeinrichtung (240), die, wenn die erste Erkennungsrate niedriger als die Zielerkennungsrate ist, eingerichtet ist zum:
Zuschneiden des Elements aus den ersten verbesserten Bildern;
Extrahieren des latenten Vektors aus dem zugeschnittenen Element durch ein KI-Modell;
Analysieren des latenten Vektors basierend auf dem KI-Modell;
Speichern des latenten Vektors in einer Datenbank; und
Bereitstellen des analysierten latenten Vektors für die Konvertierungseinrichtung (210),
wobei das Element eine Fahrspur und ein Fahrzeug umfasst, die in den Eingangsbildern enthalten sind,
wobei die Konvertierungseinrichtung (210) ferner zweite verbesserte Bilder erzeugt, indem das generative KI-Modell mit dem analysierten latenten Vektor aktualisiert wird und die Eingangsbilder durch das aktualisierte generative KI-Modell in die zweiten verbesserten Bilder konvertiert werden.

2. Vorrichtung nach Anspruch 1,
wobei die Bestimmungseinrichtung (230) ferner eine zweite Erkennungsrate des Bilderkennungsmodells für das Element in den zweiten verbesserten Bildern mit der Zielerkennungsrate vergleicht, und
wobei, wenn die zweite Erkennungsrate niedriger als die Zielerkennungsrate ist, die Analyseeinrichtung (240) ferner den latenten Vektor analysiert und den analysierten latenten Vektor für die Konvertierungseinrichtung (210) bereitstellt.

3. Vorrichtung nach Anspruch 2, wobei die Analyseeinrichtung (240) ferner den analysierten latenten Vektor des Elements iterativ für die Konvertierungseinrichtung (210) bereitstellt, bis die Erkennungsrate gleich oder größer als die Zielerkennungsrate ist.

4. Vorrichtung nach einem der Ansprüche 1 bis 3, wobei die Zielerkennungsrate von einer Stufe des autonomen Fahrens abhängt, und
wobei die Eingangsbilder synthetische Simulationsbilder umfassen.

5. Computerimplementiertes Verfahren zum Lernen einer Bilderkennung, wobei das Verfahren Folgendes umfasst:
Erzeugen (S310), durch eine Konvertierungseinrichtung (210), von ersten verbesserten Bildern, indem Eingangsbilder durch ein generatives Modell der künstlichen Intelligenz, KI, das einen latenten Vektor eines Elements in den Eingangsbildern verbessert, in die ersten verbesserten Bilder konvertiert werden;
Trainieren (S320), durch eine Trainingseinrichtung (220), eines auf KI basierenden Bilderkennungsmodells unter Verwendung der ersten verbesserten Bilder;
Vergleichen (S330), durch eine Bestimmungseinrichtung (230), einer ersten Erkennungsrate des Bilderkennungsmodells für das Element mit einer für das Element voreingestellten Zielerkennungsrate; und
durch eine Analyseeinrichtung (240), wenn die erste Erkennungsrate niedriger als die Zielerkennungsrate ist, Zuschneiden des Elements aus den ersten verbesserten Bildern, Extrahieren des latenten Vektors aus dem zugeschnittenen Element durch ein KI-Modell, Analysieren des latenten Vektors des Elements basierend auf dem KI-Modell, Speichern des latenten Vektors in einer Datenbank und Bereitstellen des analysierten latenten Vektors für die Konvertierungseinrichtung (210), wobei das Element eine Fahrspur und ein Fahrzeug umfasst, die in den Eingangsbildern enthalten sind; und
Erzeugen (S360), durch die Konvertierungseinrichtung (210), von zweiten verbesserten Bildern, indem das generative KI-Modell mit dem analysierten latenten Vektor aktualisiert wird und die Eingangsbilder durch das aktualisierte generative KI-Modell in die zweiten verbesserten Bilder konvertiert werden.

6. Verfahren nach Anspruch 5, wobei das Vergleichen Folgendes umfasst:
Vergleichen, durch die Bestimmungseinrichtung (230), einer zweiten Erkennungsrate des Bilderkennungsmodells für das Element in den zweiten verbesserten Bildern mit der Zielerkennungsrate, und
wobei das Analysieren Folgendes umfasst:
Analysieren, durch die Analyseeinrichtung (240), des latenten Vektors, wenn die zweite Erkennungsrate niedriger als die Zielerkennungsrate ist; und
Bereitstellen des analysierten latenten Vektors für die Konvertierungseinrichtung (210).

7. Verfahren nach Anspruch 6, wobei das Verfahren ferner Folgendes umfasst: iteratives Bereitstellen des analysierten latenten Vektors des Elements für die Konvertierungseinrichtung (210), bis die Erkennungsrate gleich oder größer als die Zielerkennungsrate ist.

8. Verfahren nach einem der Ansprüche 5 bis 7,
wobei die Zielerkennungsrate von einer Stufe des autonomen Fahrens abhängt, und
wobei die Eingangsbilder synthetische Simulationsbilder umfassen.

## Revendications

1. Appareil de reconnaissance d'image, l'appareil comprenant:
un dispositif de conversion (210) configuré pour générer des premières images améliorées en convertissant des images d'entrée en premières images améliorées à l'aide d'un modèle d'intelligence artificielle, IA, générative qui améliore un vecteur latent d'un élément présent dans les images d'entrée;
un dispositif d'entraînement (220) configuré pour entraîner un modèle de reconnaissance d'images basé sur l'IA, à l'aide des premières images améliorées;
un dispositif de détermination (230) configuré pour comparer un premier taux de reconnaissance du modèle de reconnaissance d'images pour l'élément figurant dans les premières images améliorées à un taux de reconnaissance cible prédéfini pour l'élément; et
un dispositif d'analyse (240) configuré pour, dans le cas où le premier taux de reconnaissance serait inférieur au taux de reconnaissance cible:
recadrer l'élément à partir des premières images améliorées;
extraire le vecteur latent de l'élément recadré à l'aide d'un modèle IA;
analyser le vecteur latent à partir du modèle IA;
stocker le vecteur latent dans une base de données; et
fournir le vecteur latent analysé au dispositif de conversion (210),
dans lequel l'élément comprend une voie et un véhicule figurant dans les images d'entrée,
dans lequel le dispositif de conversion (210) génère en outre des deuxièmes images améliorées en mettant à jour le modèle IA générative à l'aide du vecteur latent analysé et en convertissant les images d'entrée en deuxièmes images améliorées à l'aide du modèle d'IA générative mis à jour.

2. Appareil selon la revendication 1,
dans lequel le dispositif de détermination (230) compare en outre un deuxième taux de reconnaissance du modèle de reconnaissance d'image pour l'élément figurant dans les deuxièmes images améliorées avec le taux de reconnaissance cible, et
dans lequel, dans le cas où le deuxième taux de reconnaissance serait inférieur au taux de reconnaissance cible, le dispositif d'analyse (240) analyse en outre le vecteur latent, et fournit le vecteur latent analysé au dispositif de conversion (210).

3. Appareil selon la revendication 2, dans lequel le dispositif d'analyse (240) fournit en outre de manière itérative le vecteur latent analysé de l'élément au dispositif de conversion (210) jusqu'à ce que le taux de reconnaissance soit supérieur ou égal au taux de reconnaissance cible.

4. Appareil selon l'une quelconque des revendications 1 à 3, dans lequel le taux de reconnaissance cible dépend du niveau de conduite autonome, et
dans lequel les images d'entrée comprennent des images synthétiques de simulation.

5. Procédé mis en œuvre par ordinateur pour apprendre la reconnaissance d'image, le procédé comprenant:
la génération (S310), par le dispositif de conversion (210), des premières images améliorées en convertissant des images d'entrée en premières images améliorées à l'aide du modèle d'intelligence artificielle, IA, générative qui améliore un vecteur latent d'un élément figurant dans les images d'entrée;
l'entraînement (S320), par le dispositif d'entraînement (220), d'un modèle de reconnaissance d'images basé sur l'IA, à l'aide des premières images améliorées;
la comparaison (S330), par un dispositif de détermination (230), d'un premier taux de reconnaissance du modèle de reconnaissance d'image, pour l'élément, avec un taux de reconnaissance cible prédéfini pour l'élément; et
par un dispositif d'analyse (240), au cas où le premier taux de reconnaissance serait inférieur au taux de reconnaissance cible, le recadrage de l'élément à partir des premières images améliorées, l'extraction du vecteur latent de l'élément recadré à l'aide d'un modèle d'IA, l'analyse du vecteur latent de l'élément sur la base du modèle d'IA, le stockage du vecteur latent dans une base de données, et la fourniture du vecteur latent analysé au dispositif de conversion (210), dans lequel l'élément comprend une voie de circulation et un véhicule figurant dans les images d'entrée; et
la génération (S360), par le dispositif de conversion (210), des deuxièmes images améliorées en mettant à jour le modèle d'IA générative avec le vecteur latent analysé et en convertissant les images d'entrée en deuxièmes images améliorées à l'aide du modèle d'IA générative mis à jour.

6. Procédé selon la revendication 5, dans lequel la comparaison comprend:
la comparaison, par le dispositif de détermination (230), d'un deuxième taux de reconnaissance du modèle de reconnaissance d'images pour l'élément figurant dans les deuxièmes images améliorées avec le taux de reconnaissance cible, et
dans lequel l'analyse comprend:
l'analyse, par le dispositif d'analyse (240), du vecteur latent, au cas où le deuxième taux de reconnaissance serait inférieur au taux de reconnaissance cible; et
la fourniture du vecteur latent analysé au dispositif de conversion (210).

7. Procédé selon la revendication 6, le procédé comprenant en outre:
la fourniture itérative du vecteur latent analysé de l'élément au dispositif de conversion (210) jusqu'à ce que le taux de reconnaissance soit supérieur ou égal au taux de reconnaissance cible.

8. Procédé selon l'une quelconque des revendications 5 à 7,
dans lequel le taux de reconnaissance des cibles dépend du niveau de conduite autonome, et
dans lequel les images d'entrée comprennent des images synthétiques de simulation.
